# EUROPÄISCHE PATENTSCHRIFT

(11) **EP 0 465 922 B1**
(45) Veröffentlichungstag und Bekanntmachung des Hinweises auf die Patenterteilung: **14.09.1994**
(21) Anmeldenummer: 91110496.6
(22) Anmeldetag: 25.06.1991
(51) Int. Cl.: C08K 3/02, C08J 9/14, C08L 75/04

(54) **Verfahren zur Herstellung von Schaumstoff auf Isocyanatbasis**
Process for preparing isocyanate based foams
Procédé pour préparer des mousses à base d'isocyanates

(30) Priorität: 26.06.1990 DE 4020283
(43) Veröffentlichungstag der Anmeldung: 15.01.1992
(73) Patentinhaber: PUREN-SCHAUMSTOFF GMBH, 88662 Überlingen (DE)
(72) Erfinder: Bommer, Hans, W-7770 Nussdorf (DE)
(74) Vertreter: Patentanwälte Westphal, Buchner, Mussgnug Neunert, Göhring

(56) Entgegenhaltungen:
- EP-A- 0 364 854
- BE-A- 643 504
- DE-A- 3 835 193
- FR-A- 2 111 731
- WORLD PATENTS INDEX LATEST Week 1482, Derwent Publications Ltd., London, GB; AN 82-27577E & JP-A-57 036 114
- WORLD PATENTS INDEX Week 4776, Derwent Publications Ltd., London, GB; AN 76-88393X

## Beschreibung

Die Erfindung betrifft ein Verfahren zur Herstellung von Schaumstoff auf Isocyanatbasis, vorzugsweise Polyurethanschaumstoff, der im Oberbegriff des Anspruchs 1 genannten Art.

Es ist bekannt, bei der Herstellung derartiger Schaumstoffe Treibmittel und Flammschutzmittel unterschiedlicher Zusammensetzung und Kombination zu verwenden. Beim Endprodukt der derart hergestellten Schaumstoffe wird das Treibmittel auch als wärmedämmendes Zellgas in den geschlossenen Zellen wirksam. Als Dämm- und Treibgas für Schaumstoffe aus Polyurethan, Polystyrol, Polyvinylchlorid, Phenolformaldehyd sind derzeit am weitesten verbreitet Fluorchlorkohlenwasserstoffe (FCKW), Wasser als Kohlendioxidbildner und Alkane, wie unter anderem aus DE 38 35 193 A1 bekannt. Die mit Fluorchlorkohlenwasserstoff getriebenen Produkte haben den Nachteil, daß bei Herstellung bzw. Entsorgung frei werdende Fluorchlorkohlenwasserstoffe in Folge ihrer hohen Stabilität in die Stratosphäre gelangen und aufgrund ihres Gehaltes an Chlor zum Abbau des dort vorhandenen Ozons beitragen können.

Aus diesem Grunde wurde in jüngerer Zeit die Produktion von Fluorchlorkohlenwasserstoff eingeschränkt. Es ist zu erwarten, daß, jedenfalls im europäischen Raum, schon in naher Zukunft die Verwendung von Fluorchlorkohlenwasserstoffen insbesondere zur Herstellung von Schaumstoff und dgl. verboten wird. Als Substitut für FCKW-haltige Treibmittel kann Kohlendioxid (CO₂) verwendet werden, das im Herstellungsprozeß durch chemische Umsetzung von Wasser mit Isocyanaten gebildet wird und beim Endprodukt in den geschlossenen Zellen des Polyurethanhartschaums anstelle von Fluorchlorkohlenwasserstoff eingeschlossen ist. Derartige Hartschäume weisen jedoch ein schlechteres Wärmedämmvermögen und nachteiligeres Brandverhalten auf. Um letzteres zu verbessern, werden Flammschutzmittel, z.B. Trichlorpropylphospate (TCPP) bzw. Trichloräthylphosphate (TCEP) beigegeben. Diese genügen jedoch vielfach nicht den gesetzlichen Anforderungen für Brandverhalten, z.B. nach der Schweizer Norm BKZ/V.

Besseres Dämmverhalten besitzen mit Alkanen getriebene Polyurethanhartschäume, die jedoch trotz Verwendung üblicher Flammschutzmittel nicht den erhöhten Anforderungen an das Brandverhalten, z.B. nach oben genannter Schweizer Norm, genügen. Zwar läßt sich das Brandverhalten durch eine extrem hohe Zugabe von Flammenschutzmitteln bekannter Art verbessern, was jedoch bei den überwiegend geschlossenzelligen Schaumstofftypen zu wesentlichen Veränderungen der technischen Daten, z.B. der Druckspannung, führt.

Der vorliegenden Erfindung liegt die Aufgabe zugrunde, ein Verfahren zur Herstellung von überwiegend geschlossenzelligen Kunststoffschaumstoffen, insbesondere Schaumstoffen auf Isocyanatbasis wie Polyurethanschaumstoffe, zu schaffen, bei welchen im Sinne des Montreal-Abkommens FCKW-freie Treibmittel verwendet werden, deren Endprodukt einerseits den erhöhten Anforderungen an das Brandverhalten entspricht und das andererseits keine wesentlich schlechteren physikalischen Eigenschaften als herkömmliche mit FCKW produzierte Schaumstoffe besitzt.

Zur Lösung dieser Aufgabe wird gemäß Anspruch 1 bei einem Verfahren der gattungsgemäßen Art als Flammschutzmittel roter Phosphor in Form einer phlegmatisierten Paste vorgeschlagen.

Aus "Kunststoff-Handbuch, Bd. VII, Polyurethane, Carl Hanser Verlag München 1966, Seite 518" ist die Verwendung von rotem Phosphor als Flammschutzmittel in Polyurethanschaumstoffen an sich seit langem bekannt.

Neu ist jedoch, bei einem gattungsgemäßen Verfahren, bei welchem ein Gemisch aus Wasser und Alkanen als Treibmittel vorgesehen ist, roten Phosphor in Form einer phlegmatisierten Paste als Flammschutzmittel zu verwenden.

Nach dem Vorschlag gemäß Anspruch 2 kann als zusätzliches Flammschutzmittel Trichlorpropylphosphat (TCPP) und/oder Polyammoniumphosphat beigegeben werden.

Das aus Wasser und vorzugsweise Pentan bestehende Treibmittel sollte gemäß Anspruch 3 z. B. einen Siedepunkt von 10 bis 100 °C besitzen.

Auch kann gemäß Anspruch 4 zusätzlich teilhalogenierter Kohlenwasserstoff als Treibmittel eingesetzt werden.

Die Herstellung von Kunststoffschaumstoffen, insbesondere Schaumstoffen auf Isocyanatbasis, unter Verwendung von unterschiedlichen Treibgasen ist grundsätzlich bekannt (DE-OS 1 694 215, 1 694 142, 1 720 768, Kunststoffhandbuch, Band 7 "Polyurethan", herausgegeben von Vieweg und Höchtlen, Carl Hanser Verlag, München 1966 bzw. Neuauflage, herausgegeben von G. Örtl, Carl Hanser Verlag München, Wien 1983). Es handelt sich bei den bekannten Schaumstoffen im wesentlichen um solche, die Urethan- und/oder Isocyanat- und/oder Allophanat- und/oder Uretdion- und/oder Harnstoff- und/oder Carbodiimid-Gruppen aufweisen. Das erfindungsgemäße Verfahren dient vorzugsweise der Herstellung von sogenannten FCKW-freien Polyurethan- und Polyisocyanurat-Schaumstoffen, die sowohl durch Block- als auch Plattenverschäumung im Doppeltransportbandverfahren hergestellt werden. Andere Verschäumungsarten, wie z.B. Hohlraumverschäumung, mit den erfindungsgemäßen Verfahrensprodukten, sind jedoch auch möglich.

Es hat sich überraschend gezeigt, daß bei Verwendung der erfindungsgemäß vorgeschlagenen Flammschutzmittel FCKW-freie, überwiegend geschlossenzellige Polyurethan- und Polyisocyanurat-Hartschäume gefertigt werden können, deren mechanische Eigenschaften sich nicht wesentlich von denjenigen unterscheiden, für deren Herstellung als Treibmittel Fluorchlorkohlenwasserstoffe verwendet werden. Insbeondere können die erhöhten Anforderungen an das Brandverhalten erfüllt werden, was sowohl bei Verwendung von Kohlendioxid als auch entzündlichen Alkanen als Treibmittel nicht ohne weiteres zu erwarten war. Die Verwendung von rotem Phosphor in Form phlegmatisierter Paste führt bei dem erfindungsgemäßen Verfahren nicht nur zu den eingangs genannten produktspezifischen Vorteilen, sondern bietet auch produktionstechnische Vorteile bezüglich der Handhabung und Verarbeitbarkeit der Endprodukte. Hinzu kommt, daß durch die erfindungsgemäßen Verfahren auch entscheidende Vorteile bei Einhaltung der Sicherheits- und/oder Umweltvorschriften, z.B. bei Einhaltung der Vorschrift "TA-Luft", erzielt werden.

Die nach den erfindungsgemäßen Verfahren hergestellten Schaumstoffe eignen sich für eine Vielzahl von Anwendungen im Industrie- und Baubereich.

Beispielhaft sind nachstehend verschiedene Rezepturen zur Ausführung des erfindungsgemäßen Verfahrens angegeben.

### Beispiel 1:

Mischung aus
100 g eines Polyols der Hydroxylzahl 480
2,5 g Silikon als Schaumbildner
2,0 g Katalysator
4,0 g roter Phosphor in phlegmatisierter Form einer Paste
Zur Herstellung von hartem Polyurethan-Hartschaum werden auf 100 g dieser Mischung
7,5 g Pentan
2,0 g Wasser
als Treibmittel eingesetzt und mit 240 g MDI (Diphenylmethan - 4,4' - diisocyanat) zur Reaktion gebracht.

### Beispiel 2:

Mischung aus
100 g eines Polyols der Hydroxylzahl 480
2,5 g Silikon als Schaumbildner
2,0 g Katalysator
4,0 g roter Phosphor in phlegmatisierter Form einer Paste
Zur Herstellung von hartem Polyurethan-Hartschaum werden auf 100 g dieser Mischung als Treibmittel
7,5 g Pentan
1,5 g Wasser
7,5 g R 22/142 b (im Verhältnis 60 : 40) als teilhalogenierter FCKW eingesetzt und mit 240 g MDI (Diphenylmethan - 4,4' - diisocyanat) zur Reaktion gebracht.

### Beispiel 3:

Mischung aus
100 g eines Polyols der Hydroxylzahl 480
2,5 g Silikon als Schaumbildner
2,0 g Katalysator
4,0 g roter Phosphor in phlegmatisierter Form einer Paste
Zur Herstellung eines harten Polyurethan-Hartschaums werden auf 100 g dieser Mischung als Treibmittel
1 g Wasser
15 g R 123 (teilhalogenierter FCKW)
eingesetzt und mit 350 MDI (Diphenylmethan - 4,4' - diisocyanat) zur Reaktion gebracht.

## Patentansprüche

1. Verfahren zur Herstellung von Schaumstoff auf Isocyanatbasis, vorzugsweise von Polyurethanschaumstoff, durch Umsetzen von Polyisocyanaten mit Verbindungen mit mindestens zwei gegenüber Isocyanaten aktiven-Wasserstoffatomen vom Molekulargewicht 400 bis 10.000, vorzugsweise mit Kettenverlängerungs- und -vernetzungsmitteln, welche mindestens zwei gegenüber Isocyanaten aktive Wasserstoffatome vom Molekulargewicht 32 bis 399 aufweisen, in Gegenwart von Flammschutzmitteln und gegebenenfalls von Katalysatoren, und bei welchen ein Gemisch aus Wasser und Alkanen als Treibmittel verwendet wird, gekennzeichnet durch die Verwendung von rotem Phosphor in Form einer phlegmatisierten Paste als Flammschutzmittel.

2. Verfahren nach Anspruch 1, gekennzeichnet durch die Verwendung von Trichlorpropylphosphaten (TCPP) und/oder Polyammoniumphosphaten als zusätzliches Flammschutzmittel.

3. Verfahren nach Anspruch 1 oder 2, dadurch gekennzeichnet, daß das Treibmittelgemisch einen Siedepunkt von 10 bis 100 °C besitzt und als Alkan Pentan enthält.

4. Verfahren nach Anspruch 1, 2 oder 3, gekennzeichnet durch die zusätzliche Verwendung von teilhalogenierten Kohlenwasserstoffen als Treibmittel.

## Claims

1. Process for the preparation of foam material based on isocyanate, preferably polyurethane foam material, by the reaction of polyisocyanates with compounds having at least two hydrogen atoms reactive towards isocyanates and having a molecular weight from 400 to 10,000, preferably with chain-lengthening agents and cross-linking agents having at least two hydrogen atoms reactive towards isocyanates and having a molecular weight from 32 to 399, In the presence of a flame retardant and optionally a catalyst, and in which a mixture of water and alkanes is used as a blowing agent, characterised by the use of red phosphorus in the form of a desensitized paste as a flame retardant.

2. Process in accordance with Claim 1, characterised by the use of trichloropropyl phosphate (TCPP) and/or polyammonium phosphate as an additional flame retardant.

3. Process in accordance with Claim 1 or 2, characterised in that, the blowing agent mixture has a boiling point from 10 to 100 °C and contains pentane as the alkane.

4. Process in accordance with Claims 1, 2 or 3, characterised by the additional use of partially-halogenated hydrocarbons as a blowing agent.

## Revendications

1. Procédé de préparation de mousse à base d'isocyanate, de préférence de mousse de polyuréthanne, par réaction de polyisocyanates avec des composés de poids moléculaires 400 à 10 000 ayant au moins deux atomes d'hydrogène actifs vis-à-vis des isocyanates de poids moléculaires 32 à 399, de préférence avec des prolongateurs de chaîne et des agents réticulants, en présence d'ignifugeants et le cas échéant de catalyseurs, et dans lesquels on utilise un mélange d'eau et d'alcanes comme agent d'expansion, caractérisé par l'utilisation de phosphore rouge sous forme de pâte stabilisée, comme ignifugeant.

2. Procédé selon la revendication 1, caractérisé par l'utilisation de phosphates de trichloropropyle (TCPP) et/ou de phosphates de polyammonium, comme ignifugeant supplémentaire.

3. Procédé selon la revendication 1 ou 2, caractérisé en ce pue le mélange d'agent d'expansion a un point d'ébullition de 10° à 100°C et contient du pentane comme alcane.

4. Procédé selon la revendication 1, 2 ou 3, caractérisé par l'utilisation supplémentaire d'hydrocarbures partiellement halogénés, comme agent d'expansion.
